# FASCICULE DE BREVET EUROPEEN

(11) **EP 0 887 613 B1**
(45) Date de publication et mention de la délivrance du brevet: **20.08.2003**
(21) Numéro de dépôt: 98104650.1
(22) Date de dépôt: 14.03.1998
(51) Int. Cl.: F41G 7/30

(54) **Procédé de programmation en vol d'un instant de déclenchement d'un élément de projectile, conduite de tir et fusée mettant en oeuvre un tel procédé**
Im-Flug-Programmierverfahren für Auslösungsmoment eines Geschosselements, Feuerleitung und Zünder zur Durchführung dieses Verfahrens
In-flight programming method of the triggering moment of a projectile element, firing control and fuse for carrying out this method

(30) Priorité: 03.04.1997 FR 9704051
(43) Date de publication de la demande: 30.12.1998
(73) Titulaire: GIAT INDUSTRIES, 78000 Versailles (FR)
(72) Inventeur: Lamorlette, Gérard, 03220 Trezelles (FR); Bredy, Thierry, 18000 Asnières les Bourges (FR)

(56) Documents cités:
- WO-A-83/03894
- WO-A-84/03759
- WO-A-89/07744
- WO-A-96/25641

## Description

Le domaine technique de l'invention est celui des procédés permettant la programmation en vol d'un instant de déclenchement d'un élément de projectile à partir d'une conduite de tir d'une arme.

Les projectiles tirés par canon ont théoriquement une trajectoire balistique bien connue.

Cependant certains facteurs externes non reproductibles sont susceptibles d'influer sur la trajectoire.

On sait ainsi que la vitesse initiale (Vo) du projectile peut varier de quelques pour-cent d'une charge de poudre à une autre en fonction des conditions de tir (température, dispersion des caractéristiques des poudres, usure du tube...). Il en résulte des écarts au niveau de l'impact au sol du projectile qui peuvent être de l'ordre de 1 à 35 km.

Les conditions atmosphériques ainsi que les écarts concernant le coefficient de traînée du projectile influent également notablement sur la trajectoire de celui-ci.

Afin d'améliorer la précision d'un tir, il est connu de transmettre à un projectile un ordre de correction de trajectoire.

Le brevet US3995792 décrit ainsi un projectile dont la trajectoire réelle est mesurée avec un moyen de poursuite laser. Une conduite de tir calcule à partir de cette mesure l'écart entre la trajectoire réelle et la trajectoire théorique et transmet au projectile des ordres de correction permettant de rapprocher la trajectoire réelle de la trajectoire théorique.

La correction de trajectoire est par exemple obtenue au moyen d'impulseurs ou de gouvernes.

Un inconvénient d'une telle solution est son coût. En effet la poursuite de la trajectoire du projectile implique la mise en oeuvre de moyens puissants (donc chers) dont la portée dépasse 15 km.

De tels moyens de poursuite sont également encombrants et de mise en oeuvre délicate.

De plus la poursuite par laser d'une grande partie de la trajectoire du projectile nuit à la discrétion du tir et risque de faciliter la localisation de l'artillerie par les forces adverses.

On connaît également un projectile totalement autonome qui se localise lui même au moyen d'un dispositif de positionnement par satellites (GPS).

Le projectile reçoit avant tir une programmation qui lui donne sa trajectoire théorique et son point d'impact au sol souhaité. Il mesure lui même sa trajectoire réelle et, au moyen d'algorithmes appropriés, commande la mise en oeuvre de moyens de correction de trajectoire.

Un tel projectile est très coûteux car il intègre une électronique associée à un dispositif d'auto-localisation par satellites. De plus, le système d'auto-localisation est encombrant et nuit à la capacité d'emport du projectile.

Le brevet WO84/03759 décrit un dispositif permettant de réduire la dispersion des tirs d'artillerie. Ce dispositif met en oeuvre un cinémomètre, un radar de poursuite du projectile et des moyens de transmission radio.

Le radar assure la poursuite de toute la trajectoire du projectile et un autre radar surveille la position de la cible. La conduite de tir envoie au projectile à un instant donné un ordre de correction de trajectoire pour le rapprocher de sa cible.

Un tel dispositif est coûteux à mettre en oeuvre puisque deux radars sont mobilisés : un pour la poursuite de cible, l'autre pour celle du projectile. La discrétion n'est pas non plus assurée puisque l'ordre de correction est envoyé sur trajectoire très loin de la plateforme de tir.

Le document WO96/25641 décrit un procédé de correction d'une trajectoire d'un projectile balistique par impulseurs à action radiale. Ce procédé de correction met en oeuvre une conduite de tir reliée à un radar de contrôle de tir permettant de poursuivre le projectile pour déterminer sa trajectoire réelle, et à un système de mesure de vitesse initiale du projectile. Un tel dispositif est également de mise en oeuvre complexe.

C'est le but de l'invention que de proposer un procédé (et une conduite de tir associée) permettant la programmation en vol d'un instant de déclenchement d'un élément de projectile, procédé et conduite de tir ne présentant pas les inconvénients des systèmes connus.

Ainsi le procédé selon l'invention permet d'améliorer notablement la précision du tir tout en ne nécessitant pas d'équipements coûteux.

Il ne nuit pas en outre à la discrétion du système d'arme.

L'invention a également pour objet une fusée destinée à équiper un projectile et à recevoir la programmation transmise par le procédé selon l'invention.

Cette fusée simple et peu coûteuse peut être adaptée à tout type de projectile et permet ainsi d'une façon simple d'améliorer la précision de tir des projectiles conventionnels déjà en stocks dans les forces armées.

Ainsi l'invention a pour objet un procédé de programmation en vol d'un instant de déclenchement d'un élément d'un projectile à partir d'une conduite de tir d'une arme, procédé dans lequel on mesure la vitesse initiale Vo du projectile, puis on mesure la vitesse d'éloignement du projectile en au moins un autre point de sa trajectoire après la sortie du tube de l'arme, procédé ***caractérisé en ce que*** les mesures de vitesse initiale et de vitesse d'éloignement sont effectuées à l'aide d'un même cinémomètre et en ce qu'on détermine à partir de ces valeurs mesurées un instant de déclenchement optimal pour l'élément de projectile de façon à minimiser l'écart entre l'impact au sol réel et l'impact au sol souhaité pour le projectile ou une charge utile qu'il libère sur trajectoire, puis on transmet au projectile une programmation ou une correction de la programmation tenant compte de cet instant de déclenchement optimal.

Avantageusement, pour déterminer l'instant de déclenchement optimal on pourra :
- déterminer l'écart au niveau de l'impact au sol prévisible qui est imputable à la variation mesurée de vitesse initiale Vo du projectile,
- en déduire l'écart prévisible au niveau de l'impact au 5 sol qui est imputable à la variation de traînée aérodynamique en soustrayant d'une mesure de la vitesse d'éloignement la variation de vitesse d'éloignement imputable à la variation de vitesse initiale,
- ajouter les deux écarts prévisibles ainsi évalués.

Pour déterminer l'instant de déclenchement optimal, on pourra également :
- déterminer l'écart prévisible au niveau de l'impact au sol en effectuant une combinaison linéaire des écarts de vitesse mesurés en au moins deux points.

Suivant une variante, on pourra :
- programmer avant tir un instant de déclenchement théorique tenant compte des caractéristiques de la trajectoire théorique recherchée,
- transmettre au projectile après tir une correction de la programmation initiale.

Alternativement on pourra transmettre au projectile après tir une programmation sous la forme d'un instant de déclenchement décompté à partir d'un instant de référence.

Dans tous les cas, la transmission au projectile sera effectuée dans les premiers instants de la trajectoire du projectile, par exemple à une distance de l'arme inférieure ou égale à dix kilomètres.

L'invention a également pour objet une conduite de tir mettant en oeuvre une tel procédé, conduite de tir caractérisée en ce qu'elle comprend un cinémomètre assurant la mesure de la vitesse initiale Vo du projectile, ainsi que la mesure de la vitesse d'éloignement du projectile en au moins un autre point de sa trajectoire après la sortie du tube de l'arme, un calculateur et des moyens de transmission.

Le cinémomètre sera avantageusement de technologie radar.

Les moyens de transmission pouvant être constitués par le cinémomètre radar lui même.

L'invention a enfin pour objet une fusée programmable destinée à être mise en place sur un projectile et à être programmée par une telle conduite de tir, fusée caractérisée en ce qu'elle comporte une horloge, un récepteur, une unité de calcul et un élément dont le déclenchement est commandé sur trajectoire.

L'élément déclenché sur trajectoire pourra être un moyen de freinage du projectile modifiant sa traînée aérodynamique, ou encore une charge pyrotechnique d'éjection d'au moins une sous-munition.

Un des avantages de l'invention est qu'elle permet une acquisition rapide d'une trajectoire estimée du projectile avec des moyens simples et peu coûteux.

Un autre avantage de l'invention est qu'elle favorise la discrétion du tir, les mesures de vitesse d'éloignement étant peu nombreuses (une à trois), réalisées ponctuellement et non en continu et à faible distance de l'arme.

Un autre avantage est que la programmation de la fusée intervient à une distance réduite de l'arme ce qui améliore la fiabilité de la programmation et réduit sa sensibilité au brouillage.

L'invention sera mieux comprise à la lecture de la description de différents modes de réalisation, description faite en référence aux dessins annexés et dans lesquels :
- la figure 1 représente schématiquement la mise en oeuvre du procédé selon l'invention à partir d'une artillerie,
- la figure 2 schématise un algorithme permettant, à partir de deux mesures de la vitesse d'éloignement du projectile, de déterminer l'écart qui serait observé au voisinage de la cible,
- la figure 3 schématise un autre algorithme permettant de déterminer l'écart,
- la figure 4 est un synoptique représentant la conduite de tir solidaire de l'arme et la fusée portée par le projectile,
- les figures 5a et 5b représentent un mode particulier de réalisation de la fusée, respectivement en position de vol et en position de freinage,
- la figure 6 représente schématiquement une autre mise en oeuvre du procédé selon l'invention à partir d'une artillerie.

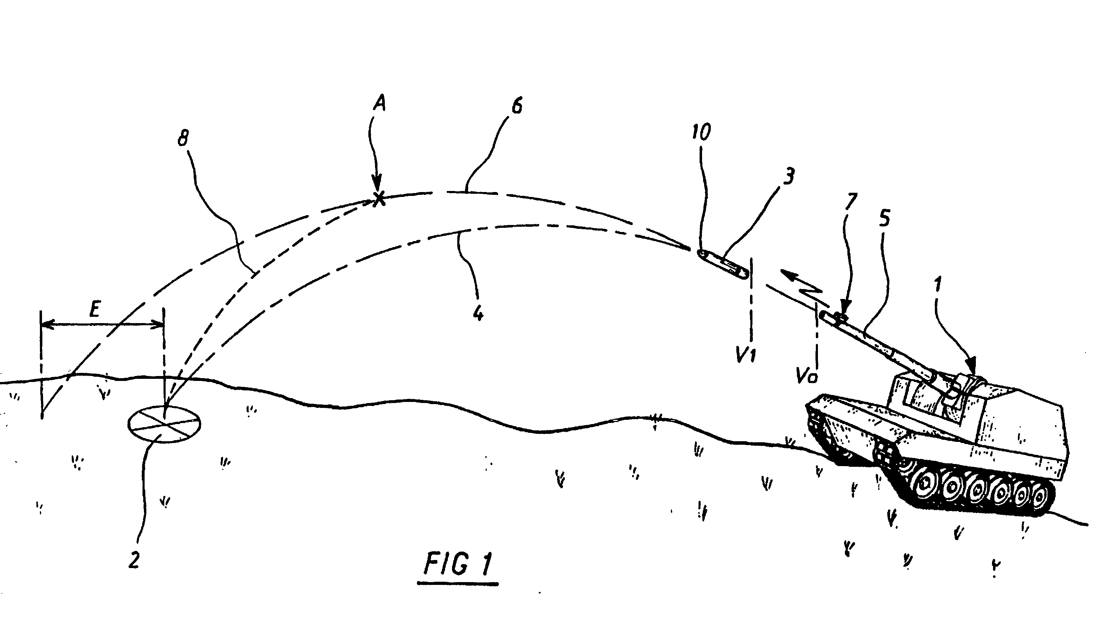

En se reportant à la figure 1, une artillerie 1 telle qu'un automoteur cherche à atteindre une cible 2 au moyen d'un projectile 3. La trajectoire balistique théorique du projectile est représentée par la courbe 4. Une conduite de tir (non représentée) intégrée à l'artillerie 1 détermine en fonction des coordonnées de la cible 2 et de l'automoteur 1, les angles de site et de gisement qu'il est nécessaire de donner au tube 5 ainsi que la charge propulsive qu'il est nécessaire d'utiliser pour obtenir la trajectoire théorique 4.

Compte tenu notamment des dispersions des caractéristiques de la poudre et de celles dues à la température, la vitesse initiale Vo du projectile à la sortie du tube de l'arme ne sera pas celle souhaitée.

De plus la résistance (ou traînée aérodynamique) du projectile n'est pas totalement maîtrisée (elle dépendra notamment du profil de la ceinture du projectile à la sortie du tube, donc de l'usure de celui-ci).

Le vent a également une influence sur la trajectoire du 5 projectile 3.

Il en résulte pour le projectile 3 une trajectoire réelle 6 qui s'écarte notablement de la trajectoire théorique et qui conduit à un écart E au niveau du point d'impact au sol du projectile.

Concrètement, on a pu montrer que pour une variation de 1% du Vo on obtenait un écart de 600 m par rapport au point visé à une distance de 35 km de l'artillerie.

On a également vérifié que les variations du coefficient de traînée aérodynamique du projectile pouvaient atteindre 2% et conduisaient à une erreur de 900 m par rapport au point visé pour une distance de tir de 35 km.

Il était connu jusqu'à présent de mesurer le Vo au moyen d'un cinémomètre 7 par exemple radar, cela afin de tenir compte de cette mesure pour le tir du projectile suivant.

Le procédé selon l'invention propose de mesurer non seulement le Vo mais aussi au moins une autre valeur (V1) de la vitesse d'éloignement du projectile 3.

La deuxième mesure V1 est effectuée à une distance de l'arme de l'ordre de 5000 m.

Les vitesses mesurées au moyen d'un cinémomètre Doppler sont des vitesses d'éloignement, c'est à dire des vitesses le long d'une droite joignant le cinémomètre au projectile.

La conduite de tir dispose donc de deux valeurs réelles de la vitesse. Elle peut en déduire une approximation de la trajectoire réelle 6 et notamment de la vitesse initiale et du coefficient de traînée.

Dans un premier mode particulier de réalisation, le projectile est un projectile explosif destiné à avoir une trajectoire jusqu'au sol.

Afin qu'il puisse parvenir au sol au niveau de la cible 2, il est donc nécessaire de corriger la trajectoire du projectile.

On pourra par exemple avoir recours à un impulseur pyrotechnique, ou encore utiliser des gouvernes déployables.

Il sera particulièrement avantageux de prévoir un dispositif qui permette d'accroître la traînée aérodynamique du projectile, par exemple des aérofreins déployables.

Le déploiement d'un tel dispositif provoquera un freinage du projectile et une modification de sa trajectoire balistique.

En fonction des caractéristiques du dispositif de freinage adopté, et à partir des mesures de vitesse précédentes, la conduite de tir pourra déduire un instant de déclenchement optimal pour l'élément de projectile de façon à minimiser l'écart E entre l'impact au sol réel et l'impact au sol souhaité.

Cet instant de déclenchement correspond au point A représenté sur la figure 1. Après le point A, la trajectoire 8 suivie par le projectile rapproche de la cible 2 l'impact au sol du projectile, minimisant ainsi l'écart E.

Après calcul de l'instant de déclenchement optimal, cette valeur est transmise au projectile, par exemple au moyen du cinémomètre ou bien par liaison hertzienne distincte.

Concrètement, il suffira lors de la définition de la conduite de tir de connaître les caractéristiques de freinage du dispositif de modification de traînée.

Des tables de tir seront établies (au moyen d'essais préliminaires et de calculs) permettant de corréler pour chaque trajectoire théorique (définie par les angles de tir et la vitesse initiale) les écarts E par rapport au point visé en fonction des écarts mesurés. Ces corrélations seront établies tant pour la vitesse initiale que pour une vitesse ultérieure, cette deuxième mesure de vitesse permettant d'estimer la part de l'écart due à la variation de traînée aérodynamique réelle du projectile.

Les algorithmes réalisés permettront pour une trajectoire théorique donnée (donc un Vo théorique et des angles de tir donnés) et à partir de deux mesures successives de la vitesse d'éloignement, de déduire l'instant auquel le dispositif d'augmentation de la traînée (ou de freinage) doit être déployé.

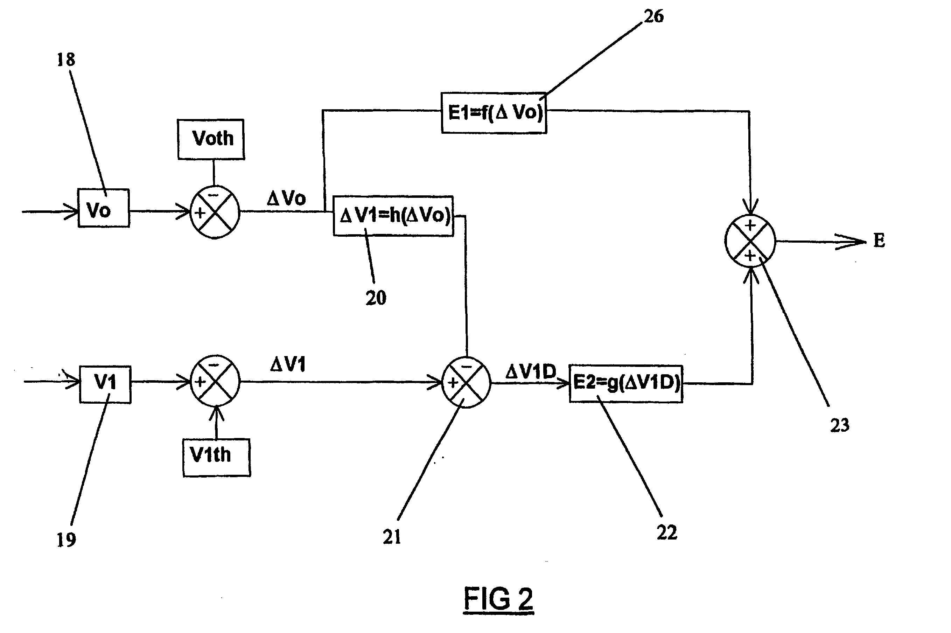

La figure 2 montre un exemple d'algorithme permettant, à partir de deux mesures de la vitesse d'éloignement du projectile, de déterminer l'écart qui serait observé (sans correction de trajectoire) au voisinage de la cible.

L'étape 18 correspond à la mesure de Vo, la valeur mesurée est comparée au Voth (Vo théorique) qui est en mémoire (table de tir). Le calculateur en déduit un ΔVo qui est l'écart mesuré.

L'étape 19 correspond à la mesure de V1. Cette valeur mesurée est comparée à une valeur Vlth (théorique) qui est en mémoire (autre table de tir), ce qui permet d'en déduire l'écart sur le V1, noté ΔV1.

L'écart mesuré sur V1 correspond pour partie à l'écart observé sur le Vo et pour partie à l'influence de la traînée aérodynamique réelle.

On a également mémorisé une fonction h qui lie le ΔV1 au ΔVo (bloc 20). On calcule donc (comparateur 21) la différence entre le ΔV1 mesuré et celui auquel on doit s'attendre compte tenu du ΔVo mesuré. Cette différence est notée ΔV1D et correspond à l'écart de vitesse dû uniquement à la traînée aérodynamique réelle.

On a mémorisé d'un part (bloc 26) dans une table de tir la fonction f qui donne l'écart prévisionnel observé au voisinage de la cible pour une variation donnée de vitesse due à la vitesse initiale (ΔVo).

On a mémorisé d'autre part (bloc 22) dans une autre table de tir la fonction g qui donne l'écart prévisionnel observé au voisinage de la cible pour une variation donnée de vitesse due à la traînée aérodynamique (ΔV1D).

On ajoute enfin (sommateur 23) les écarts dus à la fois à la variation de vitesse initiale et à la variation de traînée pour en déduire l'écart E qui sera observé par rapport à la cible.

Un autre algorithme sera ensuite utilisé pour déterminer l'instant auquel doit être appliqué une correction de trajectoire pour minimiser l'écart E. L'instant optimal dépendra des caractéristiques du moyen de freinage utilisé, caractéristiques qui seront mémorisées dans la conduite de tir.

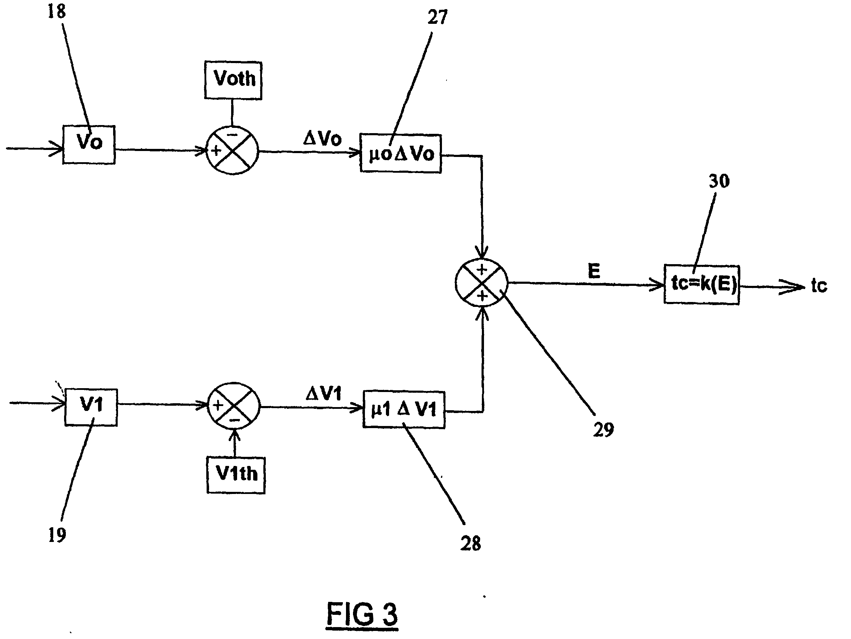

La figure 3 représente une variante de l'algorithme précédent dans laquelle les écarts mesurés ΔVo et ΔV1 sont respectivement multipliés par des coefficients µo (bloc 27) et µ1 (bloc 28) qui sont lus dans des tables de tir particulières et qui dépendent des conditions de tir (angles de tir et vitesses initiales).

L'écart prévisionnel E est obtenu en effectuant la somme (sommateur 29) µo x ΔVo + µ1 x ΔV1.

Les tables de coefficients µo et µ1 seront déterminées par calcul (et/ou essais).

On a d'autre part mémorisé dans une autre table de tir (bloc 30) une fonction k qui donne en fonction de l'écart prévisionnel E l'instant de correction tc qui doit être envoyé au projectile de façon à minimiser l'écart obtenu.

Cette fonction k dépend des caractéristiques du moyen de freinage utilisé.

L'avantage d'un tel procédé est qu'il peut être mis en oeuvre de façon extrêmement simple en utilisant un cinémomètre Doppler classique. Il n'est donc plus nécessaire d'avoir recours à un radar assurant une poursuite sur la plus grande partie de la trajectoire. Il en résulte une économie substantielle et une amélioration de la discrétion.

A titre d'exemple numérique, pour un tir à une distance de 35 km, l'écart type observé à l'impact au sol est d'environ 560m pour un projectile dépourvu de dispositif de correction. Il est de proche de 150 m pour un projectile doté d'un moyen de freinage sur trajectoire et mis en oeuvre avec le procédé de programmation selon l'invention.

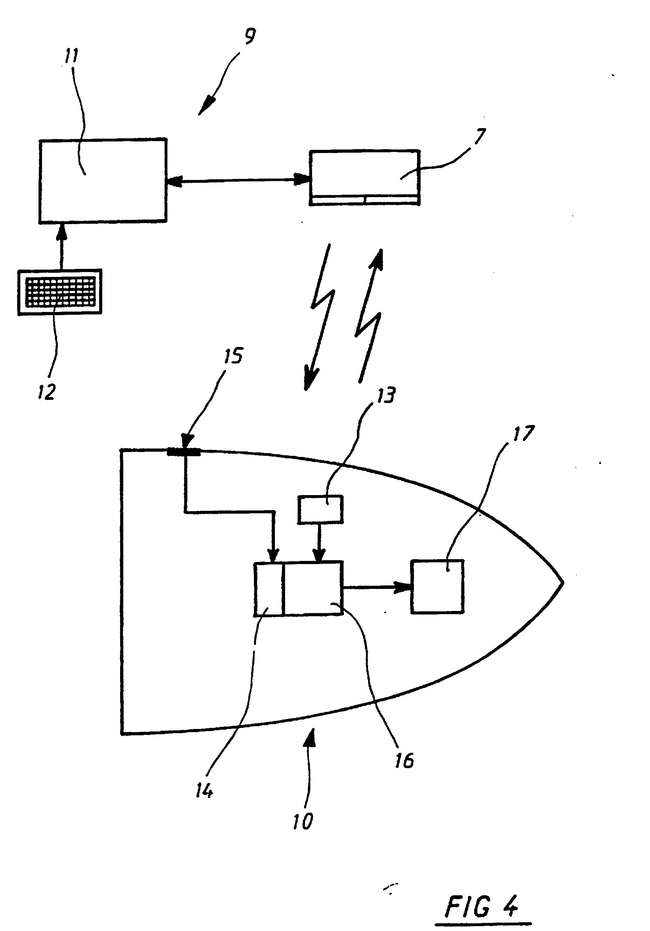

La figure 4 schématise, d'une part la conduite de tir 9 mettant en oeuvre un tel procédé, et d'autre part la fusée 10 équipant le projectile 3.

La conduite de tir comporte un calculateur 11, une interface de programmation 12 et un cinémomètre radar Doppler 7.

La fusée 10 contient une horloge 13, un récepteur 14 des ordres de programmation qui est relié à une antenne 15, une unité de calcul 16 et un élément 17 dont le déclenchement est commandé sur trajectoire et qui provoquera par exemple le déploiement de moyens de freinage. Elle contient également une source d'énergie (de type connu et non représentée) telle une pile amorçable par le tir du projectile.

L'antenne 15 est réalisée sous la forme par exemple d'une plaquette portant un circuit imprimé (ou patch) disposée sur la paroi de la fusée.

Le calculateur 11 de la conduite de tir comporte différentes mémoires ou registres stockant les tables de tir donnant les valeurs théoriques des vitesses Vo et V1 en fonction des hausses et charges propulsives utilisées.

Il comporte également les algorithmes de calcul permettant d'exploiter convenablement les mesures de vitesse effectuées (par exemple l'algorithme de la figure 2).

Il contient aussi l'algorithme permettant, en fonction de l'écart E prévisionnel par rapport à l'objectif visé et par exemple des caractéristiques de freinage de l'élément 17, de déterminer l'instant optimal de déclenchement de l'élément 17 permettant de minimiser l'écart E.

Après calcul de l'instant de déclenchement optimal de l'élément 17, la conduite de tir 9 transmet vers la fusée 10 une information de programmation de l'unité de calcul 16.

Cette information pourra être transmise par voie hertzienne avec un émetteur radio fréquence (non représenté) ou encore être transmise par le cinémomètre 7 en utilisant la fréquence radar comme porteuse.

L'antenne 15 de la fusée reçoit cette information de programmation qui est éventuellement décodée et convertie en signal numérique par le récepteur 14. La programmation est alors introduite dans une mémoire ou registre de l'unité de calcul 16 qui déclenchera à l'instant souhaité l'élément 17.

La fusée comportera des moyens connus et non représentés permettant de déterminer l'instant de tir.

La programmation transmise pourra correspondre à un intervalle de temps décompté à partir de l'instant de tir, ou encore décompté à partir d'un autre instant de référence to transmis par la conduite de tir.

L'unité de calcul de la fusée contient alors à la fois une information relative à l'instant de référence et une information relative à la durée qui doit séparer l'instant de référence et l'instant auquel doit être déclenché l'élément 17. Il lui suffit alors de mesurer le temps (donné par l'horloge 13) qui s'écoule à partir de l'instant de référence, de comparer en permanence ce temps avec la durée programmée et de déclencher l'élément 17 lorsque le temps réellement écoulé est égal au temps programmé.

Alternativement la fusée 10 pourra recevoir une programmation préalable dans l'arme qui lui donnera un instant de déclenchement de l'élément 17 correspondant à un écart théorique E à corriger, écart calculé en tenant compte des conditions de tir connues.

Le procédé selon l'invention va permettre de calculer certains paramètres réels du tir considéré (vitesse initiale réelle, décroissance de vitesse due à la traînée aérodynamique réelle). Elle en déduira un écart E estimé et enverra à la fusée une simple modification de la programmation initiale pour tenir compte de la différence entre l'écart E théorique prévu et l'écart E estimé.

Il est bien entendu possible de modifier la répartition des composants entre la conduite de tir 9 et la fusée 10.

On pourra par exemple transmettre à la fusée les valeurs de vitesses d'éloignement mesurées par le radar Doppler, la fusée contiendra alors les algorithmes lui permettant de déterminer elle même l'instant de déclenchement.

La figure Sa montre à titre d'exemple une fusée 10 qui comporte une partie avant 10a et une partie arrière 10b. La partie arrière 10b contient les différents circuits électroniques et notamment l'unité de calcul 16 reliée à l'antenne 15.

La partie avant 10a contient l'élément 17 qui est constitué ici par une charge pyrotechnique initiée par une amorce électrique.

Partie avant 10a et partie arrière 10b sont séparées par une amorce de rupture circulaire 24. La partie avant 10a pourra par exemple être constituée par une enveloppe mince en acier qui se fixera par clipsage ou collage dans une gorge portée par la partie arrière 10b.

A l'instant optimal, déterminé par la conduite de tir et contenu dans l'unité de calcul 16, cette dernière provoque l'initiation de la charge pyrotechnique 17. L'accroissement de pression qui en résulte à l'intérieur de la partie avant 10a entraîne sa séparation de la partie arrière 10b.

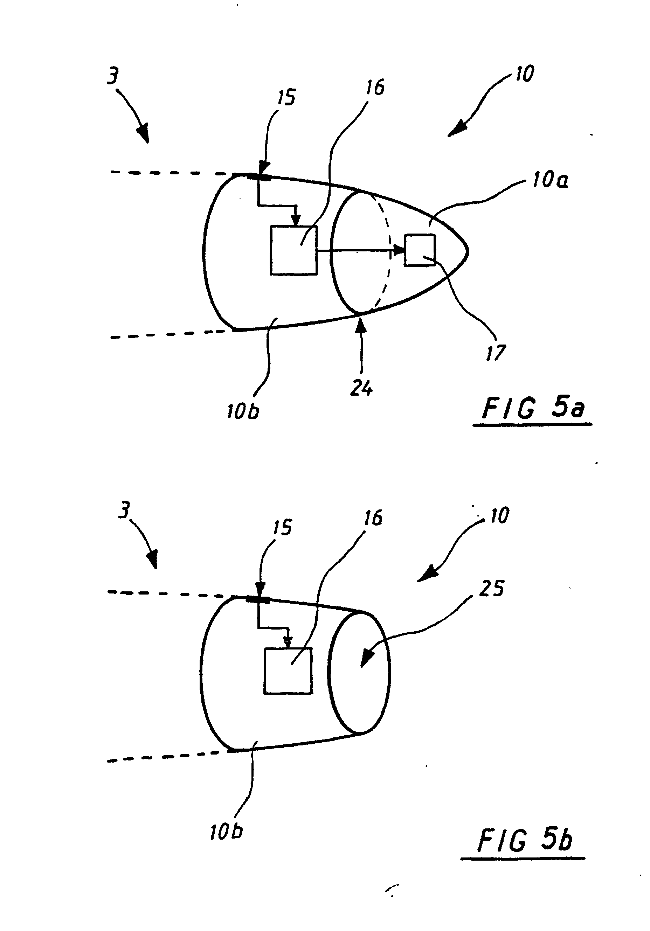

Cette éjection de la partie avant 10a provoque une brutale modification du profil de la fusée 10 qui oppose alors à l'écoulement aérodynamique une face plane 25 (fig 5b).

Il en résulte un freinage du projectile et une modification de sa trajectoire balistique, qui passe (voir figure 1) de la trajectoire 6 à la trajectoire 8, rapprochant ainsi le projectile 3 de la cible 2.

Bien évidemment les caractéristiques du freinage provoqué par la face plane 25 ont été intégrées sous forme de table de tir dans la conduite de tir 9 ce qui permet à cette dernière de déterminer l'instant de déclenchement optimal permettant de minimiser l'écart E.

L'avantage d'une telle fusée est qu'elle est très compacte. Son encombrement total n'excède pas celui des fusées d'artillerie habituelles. Il est donc possible de l'utiliser sur tous les obus d'artillerie conventionnels qui sont en dotation dans les forces armées et d'accroître ainsi les performances des systèmes d'artillerie pour un coût relativement réduit.

Il est bien entendu possible de choisir des moyens de freinage aérodynamique différents, par exemples des ailettes ou aérofreins déployables. L'élément 17 pourra alors être un micromoteur, ou un moyen pyrotechnique, ou encore un dispositif centrifuge assurant le déploiement des ailettes.

Les caractéristiques de freinage de ces moyens seront elles aussi déterminées et mémorisées dans la conduite de tir 9, plusieurs types de fusées ayant des moyens de freinage différents pourront également être gérés par la même conduite de tir.

La description précédente a été faite en référence à un obus explosif ayant un point d'impact au sol théorique par rapport auquel la conduite de tir détermine un écart prévisionnel qu'elle cherche à minimiser.

L'invention peut également s'appliquer à un obus dont l'efficacité ne résulte pas d'un impact au sol réel mais qui libère sur trajectoire des sous munitions, guidées ou non.

Dans ce cas, le principe de fonctionnement reste le même. Les trajectoires calculées sont déterminées par rapport à un impact au sol théorique et la correction de trajectoire est toujours commandée de façon à minimiser l'écart théorique.

La fusée utilisée aura dans ce cas une fonction complémentaire qui est de déclencher l'éjection de la ou des sous-munitions à un instant donné.

Les fusées chronométriques connues reçoivent une programmation de la durée de vol à l'issue de laquelle l'éjection doit être commandée, cette éjection intervient habituellement dans les derniers instants de la trajectoire, à un instant tel que le projectile se trouve à environ 500 à 1000 m d'altitude par rapport au sol.

La fusée selon l'invention commandera elle aussi l'éjection mais à un instant qui sera corrigé de façon à tenir compte de la modification de trajectoire qui est intervenue. Cette nouvelle programmation de l'instant d'éjection pourra être transmise à la fusée par la conduite de tir en même temps que la programmation de l'instant de correction de la trajectoire.

Elle pourra également avantageusement être calculée par l'unité de calcul de la fusée en fonction de l'instant de déclenchement du mécanisme de correction reçu de la conduite de tir et au moyen d'un algorithme approprié mémorisé dans la fusée.

Il est enfin possible de programmer par le procédé selon l'invention, non pas une correction de trajectoire à un instant donné mais un ordre d'éjection des sous munitions sur trajectoire. Dans ce cas l'élément 17 sera la charge pyrotechnique d'éjection des sous munitions.

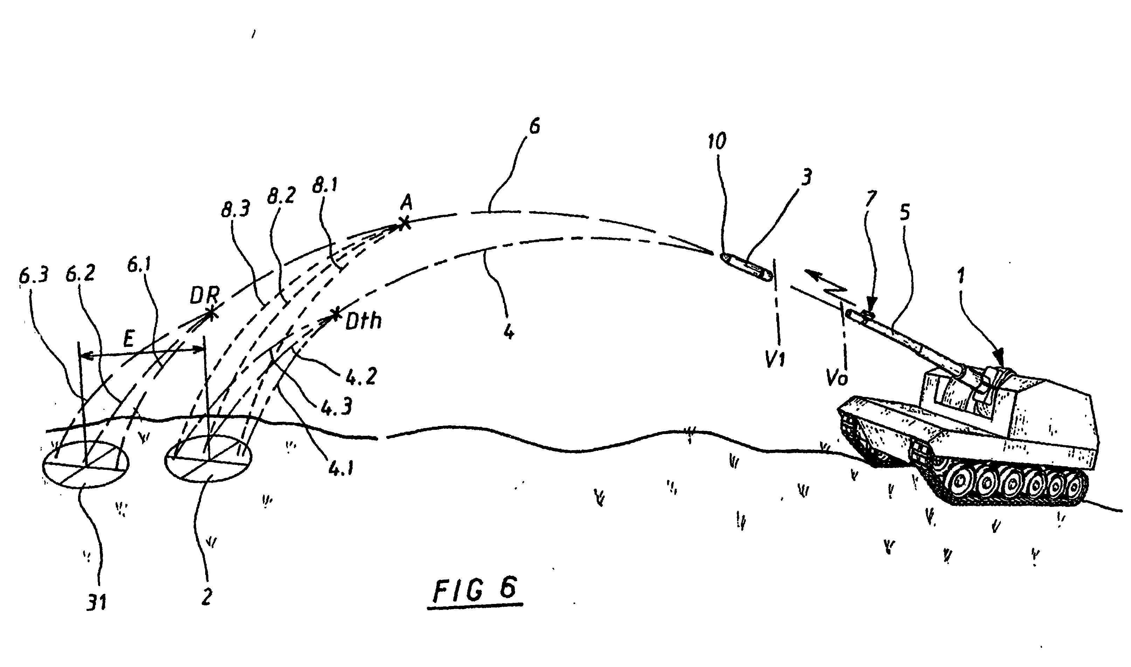

La figure 6 schématise un tel mode de mise en oeuvre du procédé selon l'invention.

La trajectoire balistique théorique du projectile est représentée par la courbe 4. Au niveau du point Dth de cette courbe le projectile 3 éjecte des sous munitions (ici trois) qui suivent alors des trajectoires théoriques 4.1, 4.2 et 4.3 qui les amènent à impacter le sol dans la zone cible 2.

Compte tenu des perturbations en vol, la trajectoire réelle suivie par le projectile 3 après tir est celle représentée par la courbe 6.

Le déclenchement normal de la fusée conduirait à une dispersion des sous munitions à partir d'un point DR de cette trajectoire. Les sous munitions suivraient alors des trajectoires 6.1, 6.2 et 6.3 qui les amèneraient dans une zone 31 distincte de la zone cible 2 et à une distance moyenne de celle ci qui correspond à un écart E.

De façon à pouvoir minimiser cet écart E, la fusée 10 utilisée mettra en oeuvre le procédé selon l'invention.

Elle commandera ainsi l'éjection à un instant qui sera corrigé de façon à tenir compte de la modification de trajectoire qui est intervenue pour le projectile.

L'éjection interviendra alors au niveau du point A de la trajectoire réelle 6, point situé avant le point d'éjection théorique DR. Les sous munitions suivront alors des trajectoires 8.1, 8.2 et 8.3 qui les amèneront dans la zone cible 2.

La conduite de tir déterminera donc, en fonction des vitesses mesurées, non pas l'écart entre les impacts au sol théorique et prévisible pour le projectile lui même mais l'écart prévisible pour les arrivées au sol de la ou des sous munitions (c'est à dire l'écart entre les zones 2 et 31).

L'instant optimal déterminé par la conduite de tir sera alors celui auquel l'éjection de sous munitions doit être déclenchée pour que ces dernières puissent traiter la zone cible 2 malgré l'écart de la trajectoire réelle par rapport à la trajectoire théorique.

Les tables de tir décrites précédemment en référence aux figures 2 et 3, et notamment celle qui donne l'instant de déclenchement (tc) en fonction de l'écart prévisionnel E, seront établies non pas en fonction des caractéristiques d'un moyen de freinage (ici absent) mais en fonction des trajectoires balistiques moyenne des sous munitions pour une éjection en un point donné d'une trajectoire.

En variante, il est bien entendu possible de mettre en oeuvre un procédé dans lequel on réalise une deuxième mesure de la vitesse d'éloignement du projectile ou encore plusieurs mesures successives de cette vitesse, ou encore une mesure continue de cette vitesse sur une partie de la trajectoire initiale du projectile.

Dans tous les cas ces mesures seront réalisées à une distance réduite de l'arme (inférieure à 10km) ce qui permet l'emploi de moyen de transmission simples et peu puissants et favorise la discrétion du tir.

## Revendications

1. Procédé de programmation en vol d'un instant de déclenchement d'un élément (17) d'un projectile (3) à partir d'une conduite de tir (9) d'une arme (1), procédé dans lequel on mesure la vitesse initiale Vo du projectile (3), puis on mesure la vitesse d'éloignement du projectile (3) en au moins un autre point de sa trajectoire après la sortie du tube de l'arme, procédé ***caractérisé en ce que*** les mesures de vitesse initiale et de vitesse d'éloignement sont effectuées à l'aide d'un même cinémomètre et **en ce qu'**on détermine à partir de ces valeurs mesurées un instant de déclenchement optimal pour l'élément (17) de projectile de façon à minimiser l'écart entre l'impact au sol réel et l'impact au sol souhaité pour le projectile ou une charge utile qu'il libère sur sa trajectoire, puis on transmet au projectile une programmation ou une correction de la programmation tenant compte de cet instant de déclenchement optimal.

2. Procédé selon la revendication 1, **caractérisé en ce que** pour déterminer l'instant de déclenchement optimal :
- on détermine l'écart au niveau de l'impact au sol prévisible qui est imputable à la variation mesurée de vitesse initiale Vo du projectile,
- on en déduit l'écart prévisible au niveau de l'impact au sol qui est imputable à la variation de traînée aérodynamique en soustrayant d'une mesure de la vitesse d'éloignement la variation de vitesse d'éloignement imputable à la variation de vitesse initiale,
- on ajoute les deux écarts prévisibles ainsi évalués.

3. Procédé selon la revendication 1, **caractérisé en ce que** pour déterminer l'instant de déclenchement optimal :
- on détermine l'écart prévisible au niveau de l'impact au sol en effectuant une combinaison linéaire des écarts de vitesse mesurés en au moins deux points.

4. Procédé selon la une des revendications 1 à 3, **caractérisé en ce que**:
- on programme avant tir un instant de déclenchement théorique tenant compte des caractéristiques de la trajectoire théorique recherchée,
- on transmet au projectile après tir une correction de la programmation initiale.

5. Procédé selon une des revendications 1 à 3, **caractérisé en ce que** on transmet au projectile après tir une programmation sous la forme d'un instant de déclenchement décompté à partir d'un instant de référence.

6. Procédé selon une des revendications 1 à 5, **caractérisé en ce que** la transmission au projectile est effectuée dans les premiers instants de la trajectoire du projectile, par exemple à une distance de l'arme inférieure ou égale à dix km.

7. Conduite de tir (9) mettant en oeuvre le procédé selon une des revendications 1 à 6, **caractérisée en ce qu'**elle comprend un cinémomètre (7) assurant la mesure de la vitesse initiale Vo du projectile (3), ainsi que la mesure de la vitesse d'éloignement du projectile (3) en au moins un autre point de sa trajectoire après la sortie du tube de l'arme, un calculateur (11) et des moyens de transmission.

8. Conduite de tir selon la revendication 7, **caractérisée en ce que** le cinémomètre (7) est de technologie radar.

9. Conduite de tir selon la revendication 8, **caractérisée en ce que** les moyens de transmission sont constitués par le cinémomètre radar (7) lui même.

10. Fusée programmable (10) destinée à être mise en place sur un projectile (3) et à être programmée par la conduite de tir (9) suivant les revendications 7 à 9, **caractérisée en ce qu'**elle comporte une horloge (13), un récepteur (14), une unité de calcul (16) et un élément (17) dont le déclenchement est commandé sur trajectoire.

11. Fusée selon la revendication 10, **caractérisé en ce que** l'élément (17) déclenché sur trajectoire est un moyen de freinage du projectile modifiant sa traînée aérodynamique.

12. Fusée selon la revendication 10, **caractérisé en ce que** l'élément (17) déclenché sur trajectoire est une charge pyrotechnique d'éjection d'au moins une sous-munition.

## Patentansprüche

1. Verfahren, das die Programmierung eines Auslösezeitpunktes eines Elementes (17) eines Projektils (3) von einer Feuerleitung (9) einer Waffe (1) aus im Flug ermöglicht, wobei in dem Verfahren die Anfangsgeschwindigkeit V₀ des Projektils (3) gemessen wird, dann die Geschwindigkeit, mit der sich das Projektil (3) entfernt, an wenigstens einem weiteren Punkt seiner Flugbahn nach dem Austritt aus dem Waffenrohr gemessen wird, wobei das Verfahren ***dadurch gekennzeichnet ist, dass*** die Messungen der Anfangsgeschwindigkeit und der Geschwindigkeit, mit der sich das Projektil entfernt, mit Hilfe eines gleichen Geschwindigkeitsmessers bewerkstelligt werden und dass von diesen gemessenen Werten ausgehend ein optimaler Auslösezeitpunkt für das Projektilelement (17) in der Weise bestimmt wird, dass die Abweichung zwischen dem Ist-Aufprall und dem Soll-Aufprall am Boden für das Projektil oder eine Nutzlast, die es auf der Flugbahn freisetzt, minimiert wird, dann wird eine Programmierung oder eine Korrektur der Programmierung, die diesem optimalen Auslösezeitpunkt Rechnung trägt, dem Projektil übermittelt.

2. Verfahren nach Anspruch 1, **dadurch gekennzeichnet, dass** zum Bestimmen des optimalen Auslösezeitpunktes, wird/werden:
- die Abweichung im Bereich des vorhergesehenen Aufpralls am Boden, der auf die gemessene Veränderung der Anfangsgeschwindigkeit V₀ des Projektils zurückzuführen ist, bestimmt wird,
- daraus auf die vorhergesehene Abweichung im Bereich des Aufpralls am Boden geschlossen, die auf die Veränderung des aerodynamischen Widerstands zurückzuführen ist, indem von einer Messung der Geschwindigkeit des sich Entfernens die Veränderung der Geschwindigkeit des sich Entfernens, die auf die Veränderung der Anfangsgeschwindigkeit zurückzuführen ist, abgezogen wird,
- die zwei vorhergesehenen so ausgewerteten Abweichungen hinzugefügt.

3. Verfahren nach Anspruch 1, **dadurch gekennzeichnet, dass** zum Bestimmen des optimalen Auslösezeitpunktes wird:
- die vorhergesehene Abweichung im Bereich des Aufpralls am Boden bestimmt, indem eine lineare Verknüpfung der an wenigsten zwei Punkten gemessenen Geschwindigkeitsabweichung vorgenommen wird.

4. Verfahren nach einem der Ansprüche 1 bis 3, **dadurch gekennzeichnet, dass**:
- vor dem Abschuss ein theoretischer Auslösezeitpunkt programmiert, der Eigenschaften der gesuchten theoretischen Flugbahn berücksichtigt wird,
- dem Projektil nach dem Abschuss eine Korrektur der anfänglichen Programmierung übermittelt wird.

5. Verfahren nach einem der Ansprüche 1 bis 3, **dadurch gekennzeichnet, dass** dem Projektil nach dem Abschuss eine Programmierung in Form eines Auslösezeitpunktes übermittelt wird, welcher von einem Referenzzeitpunkt aus zurückgerechnet wurde.

6. Verfahren nach einem der Ansprüche 1 bis 5, **dadurch gekennzeichnet, dass** die Übermittlung zum Projektil in den ersten Augenblicken der Flugbahn des Projektils bewerkstelligt wird, zum Beispiel bei einem Abstand zur Waffe von kleiner oder gleich zehn Kilometern.

7. Feuerleitung (9), die das Verfahren nach einem der Ansprüche 1 bis 6 verwendet, **dadurch gekennzeichnet, dass** sie einen Geschwindigkeitsmesser (7), der die Messung der Anfangsgeschwindigkeit V₀ des Projektils (3) sowie die Messung der Geschwindigkeit, mit der sich das Projektil (3) entfernt, an wenigstens einem weiteren Punkt seiner Flugbahn nach dem Verlassen des Waffenrohres, gewährleistet, einen Rechner (11) und Mittel zur Übermittlung umfasst.

8. Feuerleitung nach Anspruch 7, **dadurch gekennzeichnet, dass** der Geschwindigkeitsmesser (7) sich der Radar-Technologie bedient.

9. Feuerleitung nach Anspruch 8, **dadurch gekennzeichnet, dass** die Mittel zur Übermittlung aus dem Radar-Geschwindigkeitsmesser (7) selbst gebildet werden.

10. Programmierbarer Zünder (10), der dafür vorgesehen ist, in einem Projektil (3) eingesetzt und durch die Feuerleitung (9) nach der Ansprüche 7 bis 9 programmiert zu werden, wobei der Zünder **dadurch gekennzeichnet ist, dass** er einen Zeitgeber (13), einen Empfänger (14), eine Recheneinheit (16) und ein Element (17), dessen Auslösung auf der Flugbahn betätigt wird, umfasst.

11. Zünder nach Anspruch 10, **dadurch gekennzeichnet, dass** das auf der Flugbahn ausgelöste Element (17) ein Mittel zum Abbremsen des Projektils, das seinen aerodynamischen Widerstand verändert, ist.

12. Zünder nach Anspruch 10, **dadurch gekennzeichnet, dass** Das auf der Flugbahn ausgelöste Element (17) eine pyrotechnische Ladung zum Ausstoß wenigstens einer Teilmunition ist.

## Claims

1. A process for the in- flight programming of a trigger time for a projectile (3) element (17) by a fire control system (9) of a weapon (1), process in whichthe muzzle velocity (Vo) of the projectile (3) is measured, thenthe distancing velocity of the projectile (3) at at least one other point during its trajectory after exiting the weapon barrel is also measured, process ***characterized in that*** the measures of muzzle velocity and distancing velocity are made with a same velocimeter and **in that**, based on these measured values, an optimal trigger time is determined for the projectile element (17) so as to minimize the difference between the actual ground impact point and the desired ground impact point for the projectile or for a payload released during its trajectory, then a programming or corrective programming is transmitted to the projectile which takes this optimal trigger time into account.

2. A process according to claim 1, **characterized in that** to determine the optimal trigger time :
- the difference with respect to the predictable ground impact point which can be attributed to the variation measured in the muzzle velocity (Vo) of the projectile is determined,
- the predictable deviation with respect to the ground impact point attributable to the variation in aerodynamic drag is calculated by subtracting from a measurement of the distancing velocity the variation in distancing velocity attributable to the variation in muzzle velocity,
- the two predictable deviations thus estimated are added together.

3. A process according to claim 1, **characterized in that** to determine the optimal trigger time :
- the predictable deviation with respect to the ground impact point is determined by carrying out a linear combination of the differences in velocity measured at at least two points.

4. A process according to one of claims 1 to 3, **characterized in that** :
- before firing a theoretical trigger time is programmed taking into account the characteristics of the required theoretical trajectory,
- after firing, a correction to the initial programming is transmitted to the projectile.

5. A process according to one of claims 1 to 3, **characterized in that** a programming is transmitted to the projectile after firing in the form of a trigger time counted from a reference time.

6. A process according to one of claims 1 to 5, **characterized in that** transmission to the projectile is carried out in the first moments of the projectile trajectory, for exemple at a distance from the weapon less than or equal to ten kilometres.

7. A fire control system (9) implementing process according to one of claims 1 to 6, **characterized in that** it comprises a velocimeter (7) which insures the measures of muzzle velocity (Vo) and distancing velocity at at least one other point during its trajectory after exiting the weapon barrel, a computer (11) and transmission means.

8. A fire control system according to claim 7, **characterized in that** the velocimeter (7) uses radar technology.

9. A fire control system according to claim 8, **characterized in that** the transmission means are formed by the radar velocimeter (7) itself.

10. A programmable fuse (10) intended to be installed on a projectile (3) and programmed by the fire control system (9) according to claims 7 to 9, **characterized in that** it comprises a timer (13), a receiver (14), a computation unit (16) and an element (17) which is triggered during the trajectory.

11. A fuse according to claim 10, **characterized in that** the element (17) triggered during the trajectory is a means to brake the projectile thus modifying its aerodynamic drag.

12. A fuse according to claim 10, **characterized in that** the element (17) triggered during the trajectory is a pyrotechnic charge to eject at least one sub-munition.
